**Europäisches Patentamt**

**European Patent Office**

**Office européen des brevets**

(19)

(11) **EP 1 496 623 A1**

(12) **EUROPÄISCHE PATENTANMELDUNG**

(43) Veröffentlichungstag:
    **12.01.2005 Patentblatt 2005/02**

(51) Int Cl.[7]: **H04B 1/707**

(21) Anmeldenummer: **04024246.3**

(22) Anmeldetag: **13.07.1999**

(84) Benannte Vertragsstaaten:
    **AT BE CH CY DE DK ES FI FR GB GR IE IT LI LU MC NL PT SE**

(30) Priorität: **11.09.1998 DE 19841578**

(62) Dokumentnummer(n) der früheren Anmeldung(en) nach Art. 76 EPÜ:
    **99947199.8 / 1 112 623**

(71) Anmelder: **ROBERT BOSCH GMBH**
    **70442 Stuttgart (DE)**

(72) Erfinder: **Kowalewski, Frank**
    **38228 Salzgitter (DE)**

Bemerkungen:
    Diese Anmeldung ist am 12 - 10 - 2004 als Teilanmeldung zu der unter INID-Kode 62 erwähnten Anmeldung eingereicht worden.

(54) **Verfahren und Vorrichtung zur Detektion von CDMA-kodierten Signalen**

(57)     Multiuser-Verfahren zur Detektion von CDMA-kodierten Signalen sind aufgrund ihres hohen rechnerischen Aufwandes in der Regel nicht praktisch einsetzbar. Der rechnerisch einfache RAKE-Empfänger liefert dagegen deutlich schlechtere Detektionsergebnisse.

    Durch eine iterative Annäherung von Multiuser-Lösungen reduziert das erfindungsgemäße Verfahren den Rechenaufwand gegenüber herkömmlichen Multiuser-Verfahren. Eine erste Schätzung der kodierten Daten wird so lange iterativ verbessert, bis entweder ein Gütekriterium erfüllt ist oder keine Rechenzeit mehr zur Verfügung steht.

    Der Anwendungsbereich des Verfahrens liegt insbesondere dort, wo CDMA-kodierte und linear übertragene Signale erkannt werden sollen, insbesondere im Mobilfunkbereich bei Anwendung von CDMA-Verfahren.

Fig. 3

**Beschreibung**

Die Erfindung betrifft ein Verfahren und eine Vorrichtung zur Detektion von CDMA-kodierten Signalen.

CDMA bietet die Möglichkeit mehrere zeitdiskrete Datenströme zu einem Gesamtsignal so zusammenzufassen, daß die ursprünglichen Datenströme aus diesem Signal wie-. dergewonnen werden können. Die Datenströme lassen sich auch dann wiedergewinnen, wenn die CDMA-kodierten Signale durch verschiedene lineare Filter verändert werden. Die einfachste Möglichkeit der Datendetektion bietet ein sog. Matched Filter. Bessere Ergebnisse liefert der RAKE-Empfänger, der beispielsweise in A.Salmasi, K.S. Gilhousen: "On the system design aspects of code division multiple access (CDMA) applied to digital cellular and personal communications network", Proc. IEEE Conf. Veh. Technol., St. Louis, MO, USA, Mai 1991, Seiten 57-62, beschrieben ist. Diese Detektoren erfordern nur die Kenntnis des Codes des zu detektierenden Datenstroms. Sind auch die Codes der nicht zu detektierenden Datenströme bekannt, so lassen sich die durch die fremden Datenströme verursachten Interferenzen (durch nicht orthogonale Codes) bestimmen und eliminieren. Durch entsprechende Multiuser-Verfahren kann die CDMA-Detektion wesentlich verbessert werden. Neben dem optimalen Maximum-Likelihood-Detektor, der beispielsweise in W. van Alten: "Maximumlikelihood receiver for multiple channel transmission systems", IEEE Trans. Commun., Bd. 24 (1976) 276-283, beschrieben ist, sind mehrere suboptimale Verfahren bekannt, so beispielsweise W. Sauer-Greff und R.A. Kennedy: "Suboptimal MLSE for distorted multiple-access channels using the M-algorithm", Proc. Aachener Kolloquium Signal Theorie, Aachen, März 1994, 267-270; K.S. Schneider: "Detection of code division multiplexed signals", IEEE Trans. Aerosp. Electron. Syst., Bd. AES-15 (1979), 181-185; R. Lupas und S. Verdu: "Linear multiuser detectors for synchronous code division multiple-access channels", IEEE Trans. Inform. Theory, Bd 35 (1989), 123-136; Z. Xie, R.T. Short und C.K. Rushforth: "A family of suboptimum detectors for coherent multiuser communications", IEEE J. Select. Areas Commun., Bd. 8 (1990), 683-690; und A. Duel-Hallen: "Decorrelating decision-feedback multiuser detector for synchronous code-division multiple-access channels", IEEE Trans. Commun., Bd. 41(1993), 285-290.

Sind die Impulsantworten der Übertragungskanäle der kodierten Datenströme bekannt, so lassen sich auch die durch die Filterungen verursachten Interferenzen eliminieren, wie dies aus J. Salz: "Digital transmission over cross-coupled linear channels", Bell Syst. Tech. J., Bd. 64(1985), 1147-1159; A. Duel-Hallen: "Equalizers for multiple input/ multiple output channels and PAM systems with cyclostationary input sequences", IEEE J. Select. Areas Commun., Bd. 10 (1992), 630-639; und M.L. Honig, P. Crespo und K. Steiglitz: "Suppression of near- and far-end crosstalk by linear pre- and post-filtering", IEEE J. Select. Areas Commun., Bd. 10 (1992), Seiten 614-629 bekannt ist.

Größter Nachteil von Multiuser-Detektoren ist ihr erheblicher rechnerischer Aufwand. Selbst suboptimale Verfahren sind häufig aufgrund des rechnerischen Aufwandes nicht durchführbar. Andererseits bietet der rechnerisch einfache RAKE-Empfänger deutlich schlechtere Detektionsergebnisse.

Der Erfindung liegt daher die Aufgabe zugrunde, ein Multiuser-Detektionsverfahren und eine entsprechende Vorrichtung zu schaffen, die sich an der zur Verfügung stehenden Rechenleistung orientieren.

Diese Aufgabe wird durch das Verfahren mit den Merkmalen des Anspruchs 1 und die Vorrichtung mit den Merkmalen des Anspruchs 7 gelöst. Bevorzugte Ausgestaltungen der Erfindung sind Gegenstand der Unteransprüche.

Das erfindungsgemäße Verfahren zur Detektion von CDMA-codierten Signalen $\underline{d} = (\underline{d}^{(1)},...,\underline{d}^{(K)})$, mit $\underline{d}^{(k)} = (d_1^{(k)},...,d_M^{(k)})$, k = 1,...,K, weist die folgenden Schritte auf:

a) Bestimmen einer ersten Detektionslösung $\hat{\underline{d}}(1)$ der CDMA-codierten Signale $\underline{d}$;

b) Berechnen einer (n+1)-ten Detektionslösung $\hat{\underline{d}}(n+1)$ durch die Zuweisung $\hat{\underline{d}}(n+1) = f(\hat{\underline{d}}(n))$ als Funktion der n-ten Detektionslösung $\hat{\underline{d}}(n)$ für n = 1,...,N , wobei gilt daß die Iteration für große n gegen die Multiuser-Lösung $\underline{d}_{MU}$ konvergiert, d.h.

$$f(\hat{\underline{d}}(n)) \xrightarrow[n\to\infty]{} \hat{\underline{d}}_{MU},$$

c) Ist die Güte der Näherungslösung $\hat{\underline{d}}(n+1)$ nicht ausreichend, setze n → n+1 und Fortsetzen des Verfahrens mit Schritt b),

d) Ist die Güte der Lösung $\hat{\underline{d}}(n+1)$ ausreichend, Beenden des Verfahrens und Verwenden von $\hat{\underline{d}}(n+1)$ als Schätzwert der zu detektierenden Daten $\underline{d}$.

Dabei können die zu sendenden Symbole $\underline{d}^{(k)}$ kontinuierliche oder diskrete Daten repräsentieren, wobei bei einer QPSK-Modulation (Quaternary Phase Shift Keying) die Symbole vorzugsweise die Werte $\underline{d}^{(k)} = \pm 1, \pm i$ annehmen.

Vorzugsweise konvergiert das Verfahren für n → ∞ gegen die Lösung des Zero Forcing Block Linear Estimator.

Ferner kann die Funktion des Schrittes b) gebildet werden durch

$$f(\hat{\underline{d}}) = \hat{\underline{d}} + \delta \cdot \underline{g}$$

mit einem Normalisierungsfaktor

$$\delta = \frac{\|g\|}{\|A \cdot g\|^2}$$

und einem Approximationsterm

$$\underline{g}^T = A^H \cdot (\underline{s}^T - A \cdot \hat{\underline{d}}^T),$$

wobei die Matrix *A* gegeben ist durch

$$A = \begin{bmatrix} b^{(1)}_1 & 0 & \cdots & \\ \vdots & \vdots & & \\ b^{(1)}_Q & 0 & & \vdots \\ \vdots & b^{(1)}_1 & & \\ b^{(1)}_{Q+W-1} & \vdots & & 0 \\ 0 & b^{(1)}_{Q+W-1} & & b^{(K)}_1 \\ \vdots & \vdots & & \vdots \\ 0 & 0 & \cdots & b^{(k)}_{Q+W-1} \end{bmatrix}$$

mit

$$\underline{b}^{(k)} = \underline{c}^{(k)} * \underline{h}^{(k)},$$

wobei $\underline{c}^{(k)}$ die K verschiedenen Codes und $\underline{h}^{(k)}$ die Impulsantworten der K verschiedenen linearen Übertragungskanäle sind.

Als 1-te Detektionslösung zum Starten der Iteration wird vorzugsweise die Lösung $\hat{\underline{d}}^T(1) = A^H \cdot \underline{s}^T$ des RAKE-Empfängers verwendet. Ferner kann die erste Detektionslösung zum Starten der Iteration auf Null gesetzt werden.

Eine erfindungsgemäße Vorrichtung zur Durchführung des oben geschilderten Verfahrens umfaßt einen Datenschätzer zur Bestimmung einer ersten Detektionslösung, einen Schätzungsverbesserer zur Bestimmung einer verbesserten Detektionslösung und einen Entscheider zur Entscheidung über die Fortsetzung der Iteration.

Vorzugsweise umfaßt der Schätzungsverbesserer eine Einheit zur Berechnung eines geschätzten Sendesignals, eine Einheit zur Berechnung des normalisierten Approximationsterms $\delta \cdot \underline{g}$ und einen Addierer zur Berechnung der verbesserten Schätzung. Dabei kann die Einheit zur Berechnung des normalisierten Approximationsterms $\delta \cdot \underline{g}$ eine Einheit zur Berechnung des Approximationsterms $\underline{g}$, eine Einheit zur Berechnung des Normalisierungsfaktors $\delta$ und einen Multiplizierer zur Berechnung des normalisierten Approximationsterms aufweisen.

Ein besonderer Vorteil des erfindungsgemäßen Verfahrens ist darin zu sehen, daß das Verfahren nur so viel Rechenleistung erfordert, wie ihm zur Verfügung gestellt wird. Die gelieferte Lösung ist besser als die Lösung eines RAKE-Empfängers. Falls die zur Verfügung gestellte Rechenleistung ausreicht, so nähert sich die Lösung des erfindungsgemäßen Verfahrens an die Lösung des Multiuser-Verfahrens, d.h. die Lösung des Multiuser-Verfahrens wird durch das erfindungsgemäße Verfahren approximiert. Durch Vorgabe des Zeitaufwandes des Verfahrens läßt es sich leicht an verschieden komplexe Detektionsaufgaben anpassen, z.B. im Falle zeitlich variabler Übertragungskanäle des CDMA-Systems.

Eine bevorzugte Ausführungsform der Erfindung wird nachfolgend anhand der Zeichnungen erläutert.

Fig. 1 zeigt ein Ablaufdiagramm des erfindungsgemäßen Verfahrens,

Fig. 2 zeigt ein Strukturdiagramm des Detektors, und

Fig. 3 zeigt ein Diagramm des Schätzungsverbesserers des Ausführungsbeispiels der Fig. 2.

Vor der detaillierten Erläuterung der Figuren wird jedoch erst ein kurzer Abriß der Theorie des Verfahrens gegeben.

Es seien K verschiedene zeitdiskrete digitale Datenströme

$$\underline{d}^{(k)} = (d^{(k)}{}_1, d^{(k)}{}_2, ..., d^{(k)}{}_M)$$

Die zu sendenden Symbole $\underline{d}^{(k)}$ können kontinuierliche oder diskrete Daten repräsentieren. Digitale Daten werden vorzugsweise durch lineare Modulation auf diskrete komplexe Werte der Symbole $\underline{d}^{(k)}$ abgebildet, wobei bei einer QPSK-Modulation (Quaternary Phase Shift Keying) die Symbole beispielsweise die Werte $\underline{d}^{(k)} = \pm 1$ oder $\pm i$ annehmen.

Diese seien entsprechend mit K verschiedenen Codes

$$\underline{c}_{(k)} = (c^{(k)}{}_1, ..., c^{(k)}{}_Q)$$

CDMA-codiert zu:

$$\underline{a}^{(k)} =$$

$$(d^{(k)}{}_1 \cdot c^{(k)}{}_1, ..., d^{(k)}{}_1 \cdot c^{(k)}{}_Q, ..., d^{(k)}{}_M \cdot c^{(k)}{}_1, ...,$$

$$d^{(k)}{}_M \cdot c^{(k)}{}_Q)$$

Diese K Signale seien durch K verschiedene lineare Übertragungskanälen mit den Impulsantworten

$$\underline{h}^{(k)} = (h^{(k)}{}_1, ... h^{(k)}{}_W)$$

gefiltert zu:

$$\underline{s}^{(k)} = \underline{a}^{(k)} * \underline{h}^{(k)}$$

Die übertragenen Signale $\underline{s}^{(k)}$ und ein zusätzliches Rauschen $\bar{n}$ werden zu einem Gesamtsignal aufsummiert:

$$\underline{s} = \sum_{k=1}^{K} \underline{s}^{(k)} + n \; .$$

Mit

$$\underline{d} = (\underline{d}^{(1)}, ..., \underline{d}^{(K)}),$$

$$
A = \begin{bmatrix}
b^{(1)}{}_1 & 0 & \cdots & \\
\vdots & \vdots & & \\
b^{(1))}{}_Q & 0 & & \vdots \\
\vdots & b^{(1)}{}_1 & & \\
b^{(1)}{}_{Q+W-1} & \vdots & & 0 \\
0 & b^{(1)}{}_{Q+W-1} & & b^{(K)}{}_1 \\
\vdots & \vdots & & \vdots \\
0 & 0 & \cdots & b^{(k)}{}_{Q+W-1}
\end{bmatrix}
$$

und

$$
\underline{b}^{(k)} = \underline{c}^{(k)} * \underline{h}^{(k)}
$$

läßt sich $\bar{\underline{s}}$ durch ein lineares Gleichungssystem ausdrücken:

$$
\underline{s}^T = A \cdot \underline{d}^T + \underline{n}^T,
$$

wobei $\underline{s}^T$ die Transponierte des Vektor $\underline{s}$ ist.

Aus diesem Empfängersignal lassen sich die gesendeten Datenströme durch einen RAKE-Empfänger schätzen:

$$
\hat{\underline{d}}^T = A^H \cdot \underline{s}^T
$$

Dabei ist $A^H$ die zu $A$ transponierte und komplex konjugierte Matrix und $\hat{\underline{d}}$ ist die Schätzung der gesendeten Datenbits.

Bessere Ergebnisse erhält man mit einem sog. Multiuser-Verfahren, wie beispielsweise dem Zero Forcing Block Linear Estimator:

$$
\hat{\underline{d}}^T = (A^H \cdot A)^{-1} \cdot A^H \cdot \underline{s}^T.
$$

Diese Lösung kann iterativ durch eine wiederholte Anwendung der folgenden Abbildung angenähert werden:

$$
\hat{\underline{d}} \mapsto \hat{\underline{d}} + \delta \cdot g
$$

mit

$$
\delta = \frac{\|g\|^2}{\|A \cdot g\|^2}
$$

und

$$
\underline{g}^T = A^H \cdot (\underline{s}^T - A \cdot \hat{\underline{d}}^T)
$$

Das Verfahren umfaßt daher die folgenden Schritte:

i) Setze $\hat{\underline{d}}$ auf den ersten Schätzwert $\hat{\underline{d}}(1)$ für $\underline{d}$.

ii) Setze $\underline{d}$ auf den verbesserten ((n+1)-ten) Schätzwert $+\underline{d}+\delta\cdot\underline{g}$ mit

$$\delta = \frac{\|g\|^2}{\|A\cdot g\|^2} \text{ und } \underline{g}^T = A^H\cdot(\underline{s}^T - A\,\hat{\underline{d}}\cdot^T).$$

iii) Wenn keine Rechenzeit mehr zur Verfügung steht, wird $\hat{\underline{d}}$ als Schätzwert für die gesendeten Daten $\underline{d}$ genommen, ansonsten wird die Iteration mit dem Schritt ii) fortgesetzt.

Wenn man als Startwerte für die zu detektierenden Daten $\hat{\underline{d}}_i^{(k)} = 0$ annimmt, so liefert das Verfahren im ersten Schritt die Lösung des RAKE-Empfängers.

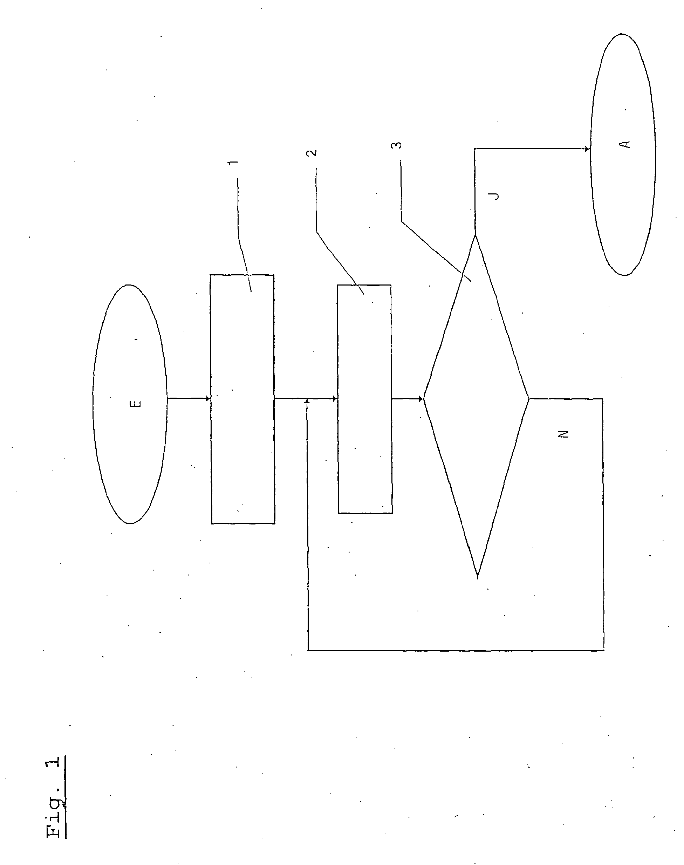

Das Verfahren ist in der Fig. 1 dargestellt. Als Eingabe E müssen das Gesamtsignal, die notwendigen Codes und die Kanalimpulsantworten zur Verfügung stehen. In einem ersten Schritt 1 wird die Detektionslösung $\underline{d}$ auf einen ersten Schätzwert $\underline{d}(1)$ der gesendeten Daten $\underline{d}$ gesetzt. In einem zweiten Schritt 2 wird die Detektionslösung $\underline{d}(2)$ auf einen verbesserten Schätzwert $\underline{d}(1) + \delta\cdot\underline{g}$ mit den obigen Definitionen für $\delta$ und $\underline{g}$ gesetzt. In dem folgenden Schritt 3 wird geprüft, ob keine weitere Rechenzeit zur Verfügung steht oder ob die Verbesserung ausreichend ist. Ist dies der Fall so wird die Iteration beendet und der verbesserte Schätzwert als Lösung genommen. Steht dagegen weitere Rechenzeit zur Verfügung oder ist die Verbesserung nicht ausreichend, so wird zum zweiten Schritt 2 zurückgekehrt, der verbesserte Schätzwert wird als Ausgangswert genommen und ein weiterer Iterationsschritt durchgeführt.

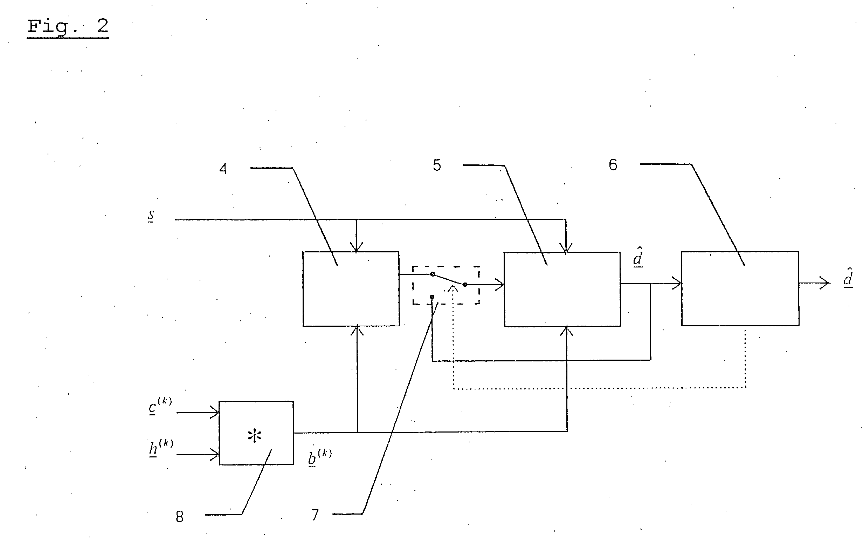

Fig. 2 zeigt die Struktur eines Detektors, der das oben beschriebene Verfahren durchführt. Eingangsgrößen sind das empfangene Signal $\underline{s}$ sowie die Codes $\underline{c}^{(k)}$ und die Impulsantworten $\underline{h}^{(k)}$. In einem Datenschätzer 4 wird eine erste Schätzung der Daten aus den genannten Eingangsgrößen vorgenommen. Diese erste Schätzung wird über einen Umschalter 7 in einen Schätzungsverbesserer 5 eingegeben. In dem Schätzungsverbesserer 5 wird die erste Schätzung des ersten Datenschätzers 4 unter Verwendung des oben beschriebenen Verfahrens verbessert. In einem Entscheider 6 wird bestimmt, ob einerseits keine Rechenzeit mehr zur Verfügung steht oder ob andererseits die Verbesserung der Schätzung ausreichend ist. In dem Fall, in dem noch Rechenzeit zur Verfügung steht und die Verbesserung nicht ausreichend ist, wird das Ergebnis der ersten Verbesserung wieder über den umgeschalteten Umschalter 7 als neuer Eingangswert auf den Eingang des Schätzungsverbesserers 5 gegeben. Die Iteration wird daher weitergeführt. Andernfalls wird der ermittelte Schätzwert als Wert der zu detektierenden Daten genommen. Ferner umfaßt der Detektor einen Faltungsberechner 8, der aus den Codes $\underline{c}^{(k)}$ und den Kanalimpulsantworten $\underline{h}^{(k)}$ die Größe $\underline{b}^{(k)}$ berechnet.

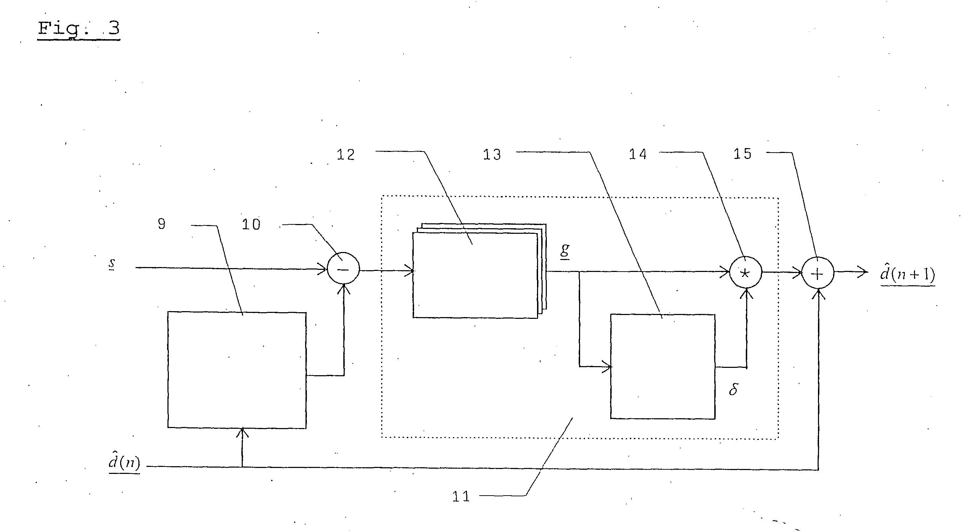

Fig. 3 zeigt ein Blockdiagramm einer bevorzugten Ausführungsform des Schätzungsverbesserers 5 der Fig. 2. In einer Einheit 9 zur Berechnung des geschätzten Sendesignals wird mit der n-ten Schätzung $\underline{d}(n)$ der Daten durch Berechnung von $A\cdot\underline{d}(n)$ die n-te Schätzung des Sendesignals berechnet und in einem Subtrahierer 10 von dem empfangenen Sendesignal $\underline{s}$ subtrahiert. Aus der Differenz wird in einer Einheit 11 der normalisierte Approximationsterm $\delta\cdot\underline{g}$ berechnet. Diese Einheit 11 umfaßt eine Berechnungseinheit 12 zur Multiplikation der Differenz mit der transponierten Matrix $A^{T,}$ wodurch der n-te Approximationsterm $\underline{g}$ berechnet wird. Aus diesem Term wird ferner in einer Normalisierungseinheit 13 der Normalisierungfaktor $\delta$ über die oben angegebene Definitionsgleichung berechnet. In einem Multiplizierer 14 wird der normierte Approximationsterm $\delta\cdot\underline{g}$ als Produkt des Normalisierungsfaktors $\delta$ und des Approximationsterms $\underline{g}$ berechnet. In einem Addierer 15 wird dann der (n+1)-te Schätzwert $\underline{d}(n+1)$ durch Addition des n-ten Schätzwertes $\underline{d}(n)$ und des normierten (n)-ten Approximationsterms $\delta\cdot\underline{g}$ gebildet.

**Patentansprüche**

**1.** Verfahren zur Detektion von CDMA-codierten Signalen $\underline{d} = (\underline{d}^{(1)},...,\underline{d}^{(K)})$, mit $\underline{d}^{(k)} = ((k),...,d_M^{(k)})$, $k = 1,...,K$, **dadurch gekennzeichnet, daß** das Verfahren die folgenden Schritte aufweist:

a) Bestimmen einer ersten Detektionslösung $\hat{\underline{d}}(1)$ der CDMA-codierten Signale $\underline{d}$;

b) Bestimmen einer (n+1)-ten Detektionslösung $\underline{d}(n+1)$ für n = 1,...,N als Funktion der n-ten Detektionslösung $\underline{d}(n)$ durch die Zuweisung

$$\hat{\underline{d}}(n+1) = f((\hat{\underline{d}}n)),$$

wobei gilt daß die Iteration für $n \rightarrow \infty$ gegen die Multiuser-Lösung $\hat{\underline{d}}_{MU}$ konvergiert, d.h.

$$\mathtt{f}(\hat{\underline{d}}(\mathtt{n})) \xrightarrow[n \to \infty]{} \hat{\underline{d}}_{\mathrm{MU}},$$

c) Ist die Güte der Näherungslösung $\hat{\underline{d}}$(n+1) nicht ausreichend, Zuweisen n→n+1 und Fortsetzen des Verfahrens mit Schritt b),

d) Ist die Güte der Lösung $\hat{\underline{d}}$(n+1) ausreichend, Beenden des Verfahrens und Verwenden von $\hat{\underline{d}}$ (n+1) als Schätzwert der zu detektierenden Daten $\underline{d}$.

2. Verfahren nach Anspruch 1, **dadurch gekennzeichnet, daß** das Verfahren für n → ∞ gegen die Lösung des Zero Forcing Block Linear Estimator konvergiert.

3. Verfahren nach einem der vorangegangenen Ansprüche, **dadurch gekennzeichnet, daß** die zu sendenden Symbole $d^{(k)}$ die Werte ±1 oder ±i annehmen.

4. Verfahren nach einem der vorangegangenen Ansprüche, **dadurch gekennzeichnet, daß** die Funktion des Schrittes b gegeben ist durch

$$\mathtt{f}(\hat{\underline{d}}) \; \hat{\underline{d}} = + \delta \cdot \underline{g}$$

mit

$$\delta = \frac{\|g\|^2}{\|A \cdot g\|^2} \text{ und } \underline{g}^T = A^H \cdot (\underline{s}^T - A \cdot \hat{\underline{d}}^T),$$

wobei die Matrix A gegeben ist durch

$$A = \begin{bmatrix} b^{(1)}_1 & 0 & \cdots & \\ \vdots & \vdots & & \\ b^{(1))}_Q & 0 & & \vdots \\ \vdots & b^{(1)}_1 & & \\ b^{(1)}_{Q+W-1} & \vdots & \ddots & 0 \\ 0 & b^{(1)}_{Q+W-1} & & b^{(K)}_1 \\ \vdots & \vdots & & \vdots \\ 0 & 0 & \cdots & b^{(k)}_{Q+W-1} \end{bmatrix}$$

mit

$$\underline{b}^{(k)} = \underline{c}^{(k)} * \underline{h}^{(k)},$$

wobei $\underline{c}^{(k)}$ die K verschiedenen Codes und $\underline{h}^{(k)}$ die Impulsantworten der K verschiedenen linearen Übertragungskanäle sind.

5. Verfahren nach einem der vorangegangenen Ansprüche **dadurch gekennzeichnet, daß** als 1-te Detektionslösung zum Starten der Iteration die Lösung $\underline{d}^T(1) = A^H \cdot \underline{s}^T$ des RAKE-Empfängers verwendet wird.

6. Verfahren nach einem der Ansprüche 1 - 4, **dadurch gekennzeichnet, daß** die erste Detektionslösung zum Starten der Iteration auf Null gesetzt wird.

7. Vorrichtung zur Durchführung des Verfahren nach einem der Ansprüche 1 - 6, **dadurch gekennzeichnet, daß** die Vorrichtung einen Datenschätzer (4) zur Bestimmung einer ersten Detektionslösung, einen Schätzungsverbesserer (5) zur Bestimmung einer verbesserten Detektionslösung und einen Entscheider (6) zur Entscheidung über die Fortsetzung der Iteration aufweist.

8. Vorrichtung nach Anspruch 7, **dadurch gekennzeichnet, daß** der Schätzungsverbesserer (5) eine Einheit (9) zur Berechnung eines geschätzten Sendesignals, eine Einheit (11) zur Berechnung des normalisierten Approximationsterms $\delta \cdot g$ und einen Addierer (15) zur Berechnung der verbesserten Schätzung aufweist.

9. Vorrichtung nach Anspruch 8, **dadurch gekennzeichnet, daß** die Einheit (11) zur Berechnung des normalisierten Approximationsterms $\delta \cdot g$ eine Einheit (12) zur Berechnung des Approximationsterms $g$, eine Einheit (13) zur Berechnung des Normalisierungsfaktors $\delta$ und einen Multiplizierer (14) zur Berechnung des normalisierten Approximationsterms aufweist.

EP 1 496 623 A1

Fig. 1

Fig. 2

EP 1 496 623 A1

Fig. 3

# EP 1 496 623 A1

**Europäisches Patentamt**

**EUROPÄISCHER RECHERCHENBERICHT**

Nummer der Anmeldung

EP 04 02 4246

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WERNER M: "MEHRSTUFIGES JOINT-DETECTION-VERFAHREN MIT ENTSCHEIDUNGSRUECKKOPPLUNG FUER CDMA MODILFUNKANWENDUNGEN" ITG FACHBERICHTE,DE,BERLIN, VDE VERLAG, Bd. NR. 130, 1. Januar 1994 (1994-01-01), Seite 357-368, XP000503811 ISBN: 3-8007-2036-1 | 1,3,7 | H04B1/707 |
| Y | * Seite 358, Zeile 27 - Seite 360, Zeile 2; Abbildungen 1,2 * * Seite 361, Zeile 17 - Seite 362, Zeile 16 * | 5 | |
| A | * Seite 363, Zeile 27 * ----- | 4,6,8,9 | |
| Y | US 5 757 791 A (KANTERAKIS EMMANUEL ET AL) 26. Mai 1998 (1998-05-26) * Spalte 11, Zeile 41 - Spalte 12, Zeile 34; Ansprüche 31,32; Abbildungen 1A,1B * * Spalte 15, Zeile 62 - Spalte 16, Zeile 8 * | 5 | |
| A | * Spalte 17, Zeile 22 - Zeile 40 * ----- -/-- | 1 | **RECHERCHIERTE SACHGEBIETE (Int.Cl.7)** H04B |

Der vorliegende Recherchenbericht wurde für alle Patentansprüche erstellt

| Recherchenort | Abschlußdatum der Recherche | Prüfer |
|---|---|---|
| Den Haag | 2. November 2004 | Nilsson, M |

## EUROPÄISCHER RECHERCHENBERICHT

**Europäisches Patentamt**

Nummer der Anmeldung

EP 04 02 4246

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WANG HAIFENG ET AL: "Joint multiuser detector with decoding and feedback in asynchronous CDMA systems" 1988 IEEE 5TH INTERNATIONAL SYMPOSIUM ON SPREAD SPECTRUM TECHNIQUES AND APPLICATIONS - PROCEEDINGS. SPREAD TECHNOLOGY TO AFRICA (CAT. NO.98TH8333), PROCEEDINGS OF ISSSTA'98 INTERNATIONAL SYMPOSIUM ON SPREAD SPECTRUM TECHNIQUES AND APPLICATIONS, SUN C, 2. September 1998 (1998-09-02), Seiten 160-163 vol.1, XP002127539 1998, New York, NY, USA, IEEE, USA ISBN: 0-7803-4281-X * Zusammenfassung * * Seite 161, rechte Spalte, Zeile 20 - Zeile 39; Abbildung 1 * * Seite 162, linke Spalte, Zeile 24 - rechte Spalte, Zeile 2 *  ----- | 1 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| Den Haag | 2. November 2004 | Nilsson, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 02 4246

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-2004

| Im Recherchenbericht angeführtes Patentdokument | Datum der Veröffentlichung | Mitglied(er) der Patentfamilie | Datum der Veröffentlichung |
|---|---|---|---|
| US 5757791 A | 26-05-1998 | WO 9739546 A1 | 23-10-1997 |

Für nähere Einzelheiten zu diesem Anhang : siehe Amtsblatt des Europäischen Patentamts, Nr.12/82

EPO FORM P0461